# EUROPÄISCHE PATENTSCHRIFT

(11) **EP 3 359 932 B1**
(45) Veröffentlichungstag und Bekanntmachung des Hinweises auf die Patenterteilung: **25.12.2024**
(21) Anmeldenummer: 16735657.5
(22) Anmeldetag: 05.07.2016
(51) Int. Cl.: G01J 5/08, G01J 5/12, H04N 23/23

(54) **HOCHAUFLÖSENDES THERMOPILE INFRAROT SENSORARRAY MIT MONOLITHISCH INTEGRIERTER SIGNALVERARBEITUNG**
HIGH-RESOLUTION THERMOPILE INFRARED SENSOR ARRAY HAVING MONOLITHICALLY INTEGRATED SIGNAL PROCESSING
RÉSEAU DE DÉTECTEURS INFRAROUGE À THERMOPILES À HAUTE RÉSOLUTION ET À TRAITEMENT DE SIGNAL INTÉGRÉ DE MANIÈRE MONOLITHIQUE

(30) Priorität: 05.10.2015 DE 102015116866
(43) Veröffentlichungstag der Anmeldung: 15.08.2018
(73) Patentinhaber: Heimann Sensor GmbH, 01109 Dresden (DE)
(72) Erfinder: FORG, Bodo, 55131 Mainz (DE); SCHNORR, Michael, 65510 Hünstetten-Wallbach (DE); SCHIEFERDECKER, Jörg, 01157 Dresden (DE); STORCK, Karlheinz, 65391 Lorch am Rhein (DE); SIMON, Marion, 65307 Bad Schwalbach (DE); LENEKE, Wilhelm, 65232 Taunusstein (DE)
(74) Vertreter: Lippert Stachow Patentanwälte Rechtsanwälte Partnerschaft mbB
(86) Internationale Anmeldenummer: PCT/EP2016/065844
(87) Internationale Veröffentlichungsnummer: WO 2017/059970

(56) Entgegenhaltungen:
- WO-A1-2013/120652
- US-A1- 2013 284 927
- V. KASSOVSKI ET AL: "Miniaturized 4x16 Thermopile Array Sensor with Integrated on Signal Conditioning on Chip", PROCEEDINGS IRS 2011, 1 January 2011 (2011-01-01), Nürnberg, pages 57, XP055300518, DOI: 10.5162/irs11/i2.5

## Beschreibung

Die Erfindung betrifft ein hochauflösendes Thermopile Infrarot Sensorarray mit monolithisch integrierter Signalverarbeitung und mehreren parallelen Signalverarbeitungskanälen für die Signale von Pixeln eines Sensorarrays, sowie einem Digitalport zur seriellen Ausgabe der Signale der Pixel, wobei sich das Sensorarray auf einem oder mehreren Sensorchips befindet.

Um ein hochauflösendes Infrarot Thermopile Sensorarray aufzubauen, muss die Zahl der einzelnen Thermopile Elemente, d.h. die Anzahl der Pixel, steigen und die geometrischen Anmessungen der Pixel selbst sinken. Die ursprünglich auf dem Markt erhältlichen Thermopile Sensorarrays wiesen nur wenige Pixel auf (z.B. 8x8 Pixel oder 16x16 Pixel), wobei die einzelnen Pixel recht groß waren (z.B. 150...300 µm x 150...300 pm). Damit war auf dem Sensorchip (z.B. aus Silizium) ausreichend Platz, um einige wenige Verstärker oder Tiefpässe auf dem Chip neben dem Thermopile Sensorarray unterzubringen.

Derzeit übliche Thermopile Sensorarrays mit größeren Pixelzahlen erfordern eine Reduzierung der Abmessungen der Pixel auf eine Seitenlänge von 100 µm, oder sogar bis herab zu 25um. Die durch die steigende Integrationsdichte kleineren Pixel haben aber den Nachteil, dass diese ein flächenproportional kleineres Signal erzeugen. Das bedeutet, dass bei einer halben Pixelgröße nur noch ein Viertel der Signalstärke für die Weiterverarbeitung zur Verfügung steht.

Die somit immer niedrigeren Signalspannungen, die meist im nV-Bereich bis zu wenigen µV liegen, erfordern immer größere Verstärkungsfaktoren, damit Signale ohne zusätzliches Rauschen oder sonstige Störeinflüsse außerhalb des eigentlichen Sensorgehäuses weiter verarbeitet werden können. Die Folge ist allerdings ein immer geringerer Signal-Rausch-Abstand.

Die durch die niedrigen Signalspannungen notwendige Signalverstärkung liegt mindestens bei einigen 1000, meist sogar über 10.000, um die Signalspannung soweit anzuheben, dass sie an andere Baugruppen weiter gegeben und weiter verarbeitet werden kann. Die zur Signalverstärkung klassischerweise verwendeten Analogverstärker mit großer Verstärkung benötigen mehrstufige Verstärker mit relativ großem Flächenbedarf und darüber hinaus weisen diese Verstärker einen beträchtlichen Stromverbrauch auf. Das bedeutet, dass die Verlustleistung und damit gleichzeitig die Eigenerwärmung ansteigen, was wiederum zu einer Vergrößerung des Messfehlers des Thermopile Sensorarrays insgesamt führt.

Mittlerweile sind Infrarot-Thermopile Sensorarrays, die mittels Silizium-Mikromechanik auf einem Chip hergestellt werden, in unterschiedlichen Ausführungsformen bekannt geworden. Bei diesen Sensorarrays findet ein Teil der Signalverarbeitung auf dem Chip statt, aber es sind nur wenige Vorverstärker und ein gemeinsamer Multiplexer vorhanden, der die Signale sämtlicher Pixel ausgibt. Die Thermopiles haben sogenannte "heiße" Kontakte auf einer zunehmend kleiner werdenden Infrarot Empfangsfläche und sogenannte "kalte" Kontakte auf einer Wärmesenke am Rand des jeweiligen Pixels. Die vom Thermopile erzeugte Signalspannung hängt unmittelbar von der erreichbaren Temperaturdifferenz zwischen den "heißen" und "kalten" Kontakten ab.

Beispielsweise sind bei einem Thermopile Sensorarray gemäß der WO 2006/122529 A1 pro Zeile des Sensorarrays jeweils ein Vorverstärker und ein Tiefpass auf dem Chip integriert. Für hochauflösende Sensorarrays mit vielen Zeilen und Spalten ist das jedoch nicht ausreichend. Beispielsweise werden bei einem Array von 64x64 Pixeln nur 64 Vorverstärker und 64 Tiefpässe verwendet. Die erzielbare Rauschbandbreite wäre bis zu 64-fach höher als nötig. Da aber das Rauschen mit der Wurzel der Rauschbandbreite ansteigt, könnte das Rauschen um bis zu 8-fach reduziert, oder das thermische Auflösungsvermögen um bis zu 8-fach verbessert werden.

Allerdings werden keine Maßnahmen für eine strom- und platzsparende Lösung für die Signalverstärkung pro Signalkanal angegeben.

Weiterhin geht aus der JP 2004-170375 A ein Thermopile Sensorarray hervor, das nur einen einzigen Vorverstärker aufweist.

In der DE 103 22 860 B4 wird eine Schaltungsanordnung zum Auslesen von elektronischen Signalen aus hochauflösenden thermischen Sensoren mit Vorverstärkern beschrieben, die sich vor einem Multiplexer befinden. Um die erhebliche Verlustleistung der einzelnen parallel arbeitenden Vorverstärker zu reduzieren, werden diese zur Stromeinsparung zyklisch abgeschaltet.

Genau durch diese Maßnahme wird jedoch die gewünschte hohe Temperaturauflösung nicht erreicht, weil die Vorverstärker vor dem Multiplexer nur dann das erwartete Ergebnis bringen können, wenn gleichzeitig die Rauschbandbreite des abgetasteten Signals proportional zur Zahl der parallelen Verstärkerkanäle reduziert wird. Das ist aber nicht möglich, wenn das verstärkte Signal über die Vorverstärker nicht kontinuierlich mittels Tiefpass zur Rauschbandbreitenbegrenzung "integriert", oder z.B. über einen Tiefpass, geglättet wird.

Aus der EP 2 587 234 A1 geht ein Thermopile Infrarotsensor mit einer Schaltung zur Signalverarbeitung hervor, bei der die Signale der einzelnen Pixel ohne Bandbegrenzung, oder zwischengeschaltete Vorverstärker, weiter geleitet werden. Weiterer Stand der Technik ist offenbart in V. Kassovski ET AL: "Miniaturized 4x16 Thermopile Array Sensor with Integrated on Signal Conditioning on Chip", Proceedings IRS 2011, Seite 57.

In sämtlichen vorstehenden Lösungen werden Thermopile Infrarot Sensorarrays beschrieben, ohne jedoch Maßnahmen zur Signalverarbeitung bei höherer Integrationsdichte auf dem Chip vorzuschlagen. Insbesondere gibt es keine Vorschläge zur Verringerung der Rauschbandbereite bei gleichzeitig geringstem Platzbedarf und geringster Verlustleistung.

Die bekannten Lösungen weisen ein unzureichendes thermisches Auflösungsvermögen auf, weil nur ein einziger oder nur sehr wenige Vorverstärkerkanäle auf dem Sensorchip integriert worden sind, was zu einer hohen Rauschbandbreite und gleichzeitig zu einem schlechten Signal/Rausch-Abstand führt.

Eine hohe Integrationsdichte erfordert, die Pixelgröße und den sogenannten Pixel Pitch, d.h. den Mittenabstand der Thermopile Pixel, zu verringern, um dadurch mehr Pixel auf gleicher Chipfläche unterzubringen. Zusätzlich sind neben einer hohen geometrischen Auflösung auch eine hohe thermische Auflösung, d.h. ein großer Signal/Rausch/Abstand- und eine niedrige rauschbegrenzte Temperaturauflösung NETD (Noise Equivalent Temperature Difference), wünschenswert.

Wegen der kleineren Empfangsfläche und wegen des dadurch bedingten geringen Abstandes zwischen den "heißen" und "kalten" Kontakten der Thermopile Pixel führt eine Verringerung der Pixelgröße gleichzeitig auch zu einer Verringerung des vom Thermopile Pixel abgegebenen Sensorsignals, was zu einem geringeren Signal/Rausch-Abstand, schlechterem thermischen Auflösungsvermögen und zu einer verringerten Messgenauigkeit führt.

Prinzipiell ist es möglich, Thermopilezellen (Thermopile Pixel) in ihrer Größe zu verringern und immer größere Pixelzahlen auf dem Sensorchip zu integrieren. Beispielsweise werden 16x16, 32x32, 64x64, 128x128 Thermopile Pixel oder mehr auf einem Sensorchip realisiert. Die Signalspannungen der einzelnen Thermopile Pixel wären über eine m x n-Adressierung und MUX Schalter zu multiplexen, d.h. auf eine gemeinsame, serielle Signalleitung zu einem Verstärker pro Array, oder über eine gemeinsame serielle Schnittstelle pro Zeile oder Spalte, zu führen.

Da die minimal noch aufzulösenden Signale von Thermopile Pixeln mit weiter verringerter Pixelabmessung bei vielen Anwendungen noch im nV Bereich liegen, müssen die Signale noch auf dem Chip ausreichend hoch verstärkt und weiter bearbeitet werden, so dass sie von elektrischen Störeinflüssen außer- und innerhalb des Sensorchips nicht beeinflusst werden können.

Verstärkungsfaktoren von typisch 10.000 oder mehr sind bei den bekannten Lösungen erforderlich, um die Sensorsignale solch kleiner Thermopile Pixel auf einige mV zu verstärken, damit die Sensorsignale nach dem MUX (Multiplexer) auf einem schnellen seriellen Analogausgang aus dem Sensorchip ausgegeben - oder von einem auf oder direkt neben dem Sensorchip integrierten schnellen AD-Wandler in Digitalsignale umgewandelt werden können.

Der Nachteil hierbei ist, dass die Bandbreite dieser nach dem Multiplexer liegenden Vorverstärker sehr hoch sein muss, um die Sensorsignale vieler, nacheinander abgetasteter Thermopile Pixel immer noch mit Bildfrequenzen von mehreren Hz bis zu mehreren 10 Hz zu übertragen.

Hierzu ist mindestens das m x n-fache der Bildfrequenz (sogenannte Frame Rate) bei einem Vorverstärker pro Array, oder das m-fache der Bildfrequenz für ein Array mit m Spalten und je einem Vorverstärker pro Spalte erforderlich. Mit der Wurzel der (Rausch-) Bandbreite steigt aber gleichzeitig auch das Rauschen des Systems an und die Temperaturauflösung NETD verschlechtert sich.

Stabil und genau arbeitende Verstärker mit großer Verstärkung erfordern mehrere Verstärkerstufen, benötigen relativ viel Platz auf dem Sensorchip und weisen außerdem einen erheblichen Stromverbrauch mit entsprechend großer Abwärme auf, die wiederum die erreichbare Signalspannung der Thermopileelemente weiter verringert.

Aus diesem Grund ist es nicht möglich, auf dem eng begrenzten Raum eines Sensorchips viele solcher großen Verstärker neben den Pixeln unterzubringen.

Der Erfindung liegt deshalb die Aufgabe zugrunde, ein Thermopile Infrarot Sensorarray mit monolithisch integrierter Signalverarbeitung und mehreren parallelen Signalverarbeitungskanälen anzugeben, das bei geringster Verlustleistung eine hohe Integrationsdichte aufweist und das zugleich thermisch und geometrisch hochauflösend ist.

Die der Erfindung zugrunde liegende Aufgabe wird durch den Gegenstand des unabhängigen Anspruchs gelöst. Die abhängigen Ansprüche betreffen Ausgestaltungen.

Es wird bei einem hochauflösenden Thermopile Infrarot Sensorarray der eingangs genannten Art vorgeschlagen, dass jeder Signalverarbeitungskanal (K₁...K_{N}) auf dem Sensorchip (SP) angeordnet ist und mindestens einen Analog/DigitalWandler (ADC) aufweist. Die Ausgänge der Analog/DigitalWandler jedes Signalverarbeitungskanal (K₁...K_{N}) sind mit einem über eine Steuerschaltung auslesbaren Speicherbereich in einem Speicher (RAM) zur Speicherung der Ergebnisse der Analog/digital-Wandler (ADC) verbunden.

Der Mittenabstand zwischen einzelnen Pixeln des Sensorarrays beträgt weniger als 200 µm und bevorzugt weniger als 100 µm.

Jedem Signalverarbeitungskanal ist mindestens ein Pixel und höchstens eine Anzahl von 16 Pixeln, bevorzugt nur 8, 4, 3 oder 2 Pixel und besonders bevorzugt ein Pixel, zugeordnet.

Weiterhin ist für jeden Signalverarbeitungskanal ein Signalmultiplexer zur Auswahl der dem Signalverarbeitungskanal zugeordneten Pixel des Sensorarrays vorgesehen.

Dem Analog/Digital-Wandler ist in jedem Signalverarbeitungskanal ein Vorverstärker vorgeschaltet.

Die Vorverstärker weisen einen Verstärkungsfaktor auf, der bei weniger als 500 und besonders bevorzugt bei weniger als 100 liegt.

Der Analog/Digital-Wandler hat eine Auflösung zwischen mindestens 10 Bit und bevorzugt von mindestens 16 Bit, wobei der Analog/Digital-Wandler nach einem integrierenden Verfahren, beispielsweise einem "Charge Balancing" oder einem "Delta-Sigma" Verfahren, arbeitet.

Jeder Signalverarbeitungskanal enthält einen Tiefpassfilter zur Begrenzung der Rauschbandbreite, dessen Grenzfrequenz mindestens das Produkt aus der Bildrate des Thermopile Infrarot Sensorarrays und der Anzahl der Pixel pro Signalverarbeitungskanal ist, jedoch nicht höher als der dreifache Betrag, vorzugsweise als der doppelte Betrag, des Produktes.

Schließlich kann der Tiefpassfilter Bestandteil eines integrierenden Analog/Digital-Wandlers sein.

Die Rauschbandbreite jedes Signalverarbeitungskanals bestimmt sich in Abhängigkeit von der jeweiligen Bildrate durch Nutzung eines integrierenden Analog/Digital-Wandlers und die vorgegebene Wandelrate des beispielsweise nach dem "Charge-Balancing" Verfahren arbeitenden Analog/DigitalWandlers.

Ein Teil der Signalverarbeitungskanäle ist bevorzugt jeweils im Zwischenraum zwischen den Pixeln, d.h. in der Nähe der Wärmesenke, angeordnet.

Weiterhin ist es im Interesse einer gleichmäßigen Verteilung der entstehenden Verlustleistung von Vorteil, wenn mindestens ein Teil der Signalverarbeitungskanäle zusammen mit weiterer Elektronik in dem das Sensorarray umgebenden Bereich im äußeren Randbereich des Sensorchips angeordnet ist.

Schließlich können auf dem Sensorchip neben den Signalverarbeitungskanälen und den Signalmultiplexern weitere elektronische Komponenten wie für die Referenzspannung, die Spannungsversorgung, eine Resetschaltung, eine Temperaturreferenz, ein Referenzdatenspeicher, ein Taktgeber, ein I/O-Digitalport sowie eine digitale Signalverarbeitung (z.B. ein digitaler Controller) integriert sein.

Als Referenzdatenspeicher eignet sich besonders ein EEPROM oder ein Flash-Speicher.

In einer ganz besonderen Ausgestaltung der Erfindung ist mindestens ein Teil der Signalverarbeitungskanäle unterhalb des Sensorchips mit den Sensorelementen auf einem separaten Chip angeordnet, wobei die elektrische Verbindung der Pixel mit den Signalverarbeitungskanälen oder/und weitere elektronische Komponenten über Durchkontaktierungen durch den Sensorchip oder andere elektrische Verbindungsmittel, wie Umverdrahtungen, erfolgt, wobei der Thermopile Infrarot Sensorchip (SP) und der separate Chip (ROIC) fest miteinander verbunden sind. Auf diese Weise lässt sich der Flächenbedarf des Sensorchips nochmals erheblich verringern.

Die Erfindung wird nachfolgend an Ausführungsbeispielen näher erläutert. In den zugehörigen Zeichnungsfiguren zeigen
- Fig. 1:: den prinzipiellen Aufbau eines erfindungsgemäßen Thermopile Infrarot Sensorarrays;
- Fig. 2:: ein Blockschaltbild einer erfindungsgemäßen Schaltungsanordnung zur integrierten Signalverarbeitung für Thermopile Infrarot Array Sensorchips mit Tiefpassfilter und je einem Signalverarbeitungskanal pro Pixel;
- Fig. 3:: ein Blockschaltbild einer erfindungsgemäßen Schaltungsanordnung für die integrierte Signalverarbeitung für Thermopile Infrarot Array Sensorchips in einer zweiten Ausführungsform, bei der die Tiefpassfunktion in einem integrierten ADC (AD-Wandler) erfolgt;
- Fig. 4:: ein Blockschaltbild einer erfindungsgemäßen Schaltungsanordnung zur integrierten Signalverarbeitung für Thermopile Infrarot Array Chips in einer dritten Ausführungsform, bei der sich mehrere Pixel einen Signalverarbeitungskanal teilen, mit Fig. 4a: Tiefpassfilter nach dem Vorverstärker und Fig. 4b: einem integrierenden AD-Wandler, der die Tiefpassfunktion übernimmt;
- Fig. 5:: ein Blockschaltbild einer weiteren erfindungsgemäßen Schaltungsanordnung für die integrierte Signalverarbeitung für Thermopile Infrarot Sensorarrays, bei der die Tiefpassfunktion in einem integrierenden AD-Wandler erfolgt;
- Fig. 6a:: eine schematische Schnittdarstellung eines Sensorchips mit Durchkontaktierungen und einem unter diesem angeordneten separaten Chip mit in diesem integrierten Signalverarbeitungskanälen und weiterer Speicher- und Signalverarbeitungs-Elektronik; und
- Fig. 6b:: die Anordnung nach Fig. 6a, jedoch ergänzt mit einem Abdeckwafer mit einem Strahlungseintrittsfenster und zusätzlichen elektrischen Verbindungsmitteln, wie Bonddrähten zur Verbindung mit weiteren Funktionsbaugruppen zum Betrieb des Thermopile Infrarot Sensorarrays.

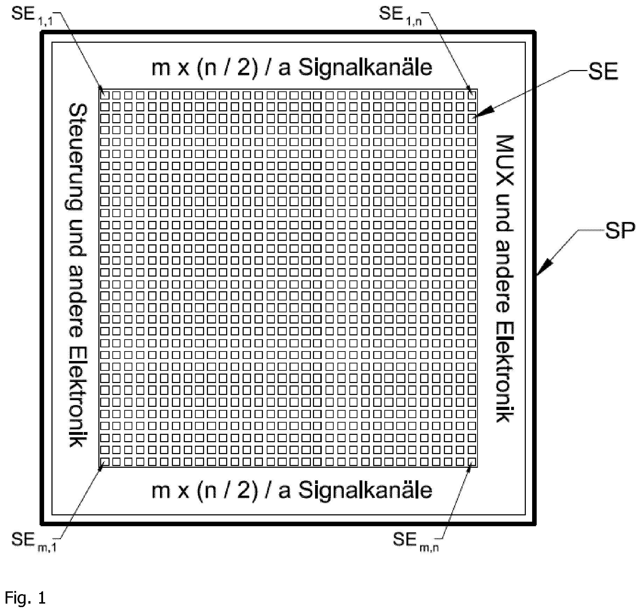

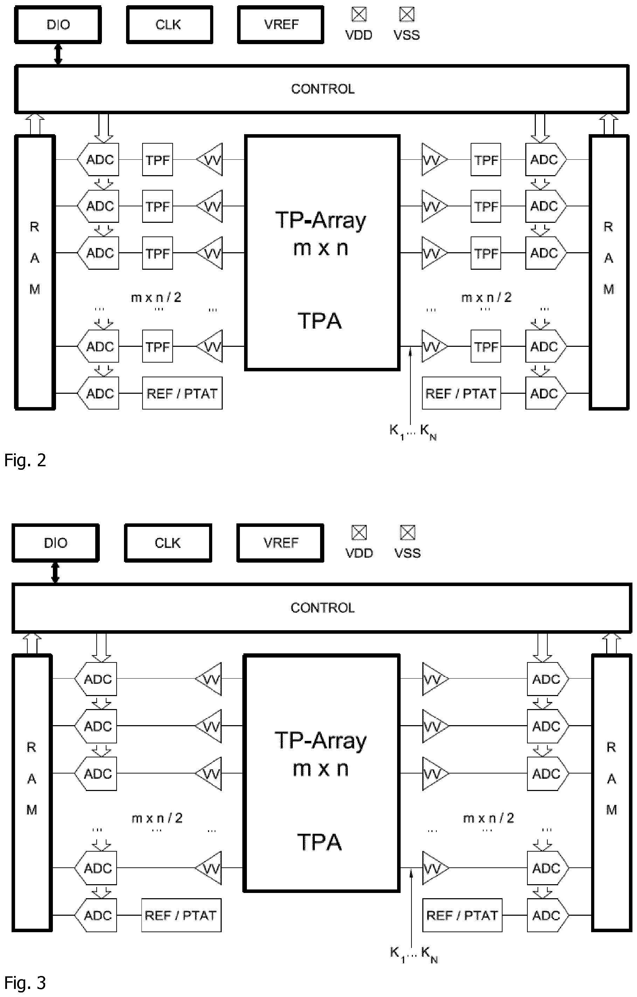

Aus Fig. 1, 2 ist der grundsätzliche Aufbau eines erfindungsgemäßen Thermopile Infrarot Sensorarrays mit einem im Zentrum des Sensorchips angeordneten Thermopile Infrarot Sensorarray TPA in Matrixform mit m x n Pixeln SE 1.1 ... SE 1.n x SE m1.1 ...SE m, n ersichtlich. Um die Pixel SE bzw. um das Pixelfeld herum befinden sich bevorzugt auf zwei Seiten m x (n/2) / a Signalverarbeitungskanäle K₁...K_{N} auf dem gleichen Sensorchip SP, welche die Signale der einzelnen Pixels SE verstärken, filtern und in digitale Signale umwandeln. Jeweils eine Anzahl von a Pixeln teilt sich hier einen Signalverarbeitungskanal K₁...K_{N}.

Prinzipiell können auch sämtliche Signalverarbeitungskanäle auf einer Seite des Pixelfeldes liegen, wobei das Thermopile Infrarot Sensorarray dann eine asymmetrische Wärmeverteilung aufweist.

Wesentlich für die Funktion von Thermopiles ist, dass diese "heiße" und "kalte" Kontakte aufweisen, die über möglichst lange Leitbahnen miteinander verbunden sind, d.h. möglichst weit voneinander entfernt angeordnet sind und wobei die "heißen" Kontakte auf einem Strahlungsempfänger (nicht dargestellt) und die "kalten" Kontakte auf einer Wärmesenke am Rand des Pixels angeordnet sind, um eine auswertbare Signalspannung in Abhängigkeit vom Temperaturunterschied zwischen den "heißen" und "kalten" Kontakten zu erzeugen.

Jedes Pixel SE des Thermopile Infrarot Sensorarrays TPA enthält eine an sich bekannte miniaturisierte Thermopilezelle und über jeder Thermopilezelle optional ein Strahlungseintrittsfenster mit einer geeigneten Optik. Die einzelnen Thermopilezellen haben einen Mittenabstand (sogenanntes Pixel Pitch) von höchstens 400 pm, bevorzugt weniger als 200 µm und besonders bevorzugt von weniger als 100 µm. Je geringer der Pixel Pitch, desto kleiner wird das gesamte Thermopile Infrarot Sensorarray Chip und auch die Dimension der erforderlichen Optik zur Abbildung der Infrarotstrahlung auf dem Pixel SE verringert sich bei gleicher Pixelzahl. Eine Verringerung der Chip- und Optikabmessungen führt üblicherweise auch zu geringeren Fertigungskosten.

Optional erlaubt ein geringerer Pitch mehr Pixel SE auf einem Sensorchip vorgegebener Größe unterzubringen, um somit ein höheres optisches Auflösungsvermögen zu erreichen.

Fig. 2 zeigt ein Blockschaltbild einer erfindungsgemäßen Schaltungsanordnung für die integrierte Signalverarbeitung für Thermopile Infrarot Sensorarrays TPA mit spiegelbildlichem Aufbau, mit einem zentralen Thermopile Infrarot Sensorarray TPA mit einem Vorverstärker VV, einem nachgeschalteten Tiefpassfilter TPF und einem Analog/Digital-Wandler ADC je Signalverarbeitungskanal K₁...K_{N} auf zwei Seiten des Sensorarrays TPA pro Pixel SE.

Die Ausgänge der Analog/Digital-Wandler ADC sind mit einem Speicherfeld RAM verbunden, das über eine Steuerschaltung CRTL ausgelesen werden kann, so dass die digitalen Ausgangssignale an einem digitalen Eingangs- und Ausgangsport DIO zur Weiterverarbeitung zur Verfügung stehen.

Weiterhin befinden sich auf jedem Sensorchip SP die für den Betrieb nötigen Baugruppen, wie Taktgeber CLK und für die nötige Spannungsversorgung VDD, VSS und eine oder mehrere Referenzspannungen VREF oder REF/PTAT und auch zusätzliche ESD Schaltblöcke verfügen.

Erfindungsgemäß ist eine große Anzahl von individuellen Signalverarbeitungskanälen K₁...K_{N} auf oder unter demselben Sensorchip SP integriert, wobei sich eine Anzahl a von höchstens 16 oder 8 Pixel SE einen Signalverarbeitungskanal K₁...K_{N} teilt, bevorzugt teilen sich jedoch nur jeweils a = 4, 3 oder 2 Pixel SE einen Signalverarbeitungskanal.

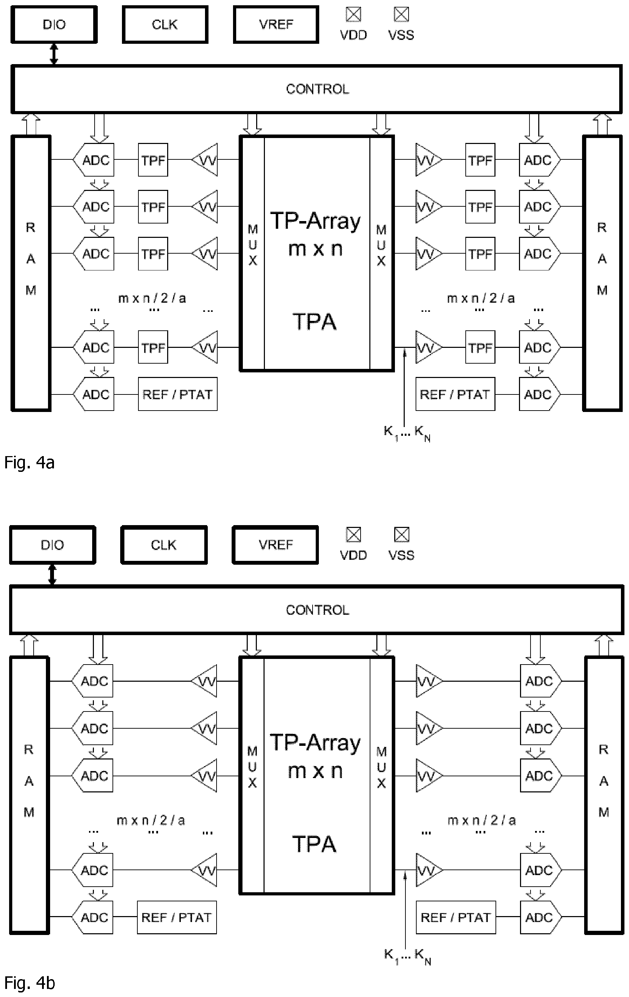

Die entsprechende Anzahl a an Pixeln SE ist über Multiplexer MUX, oder Bereiche eines Multiplexers MUX auf den jeweilig zugeordneten Signalverarbeitungskanal K₁...K_{N} geschaltet (Fig. 4a). Besonders bevorzugt besitzt jedes Pixel einen eigenen Signalverarbeitungskanal K₁...K_{N} (d.h. a = 1); siehe Fig. 3 und Fig. 4b). Dann wird die geringste Rauschbandbreite und damit das geringste Rauschen und die beste Temperaturauflösung erreicht. Außerdem kann dann auf die Multiplexer vor dem Signalverarbeitungskanal K₁...K_{N} verzichtet werden (Fig. 2).

Da sich aber durch mehr Signalverarbeitungskanäle K₁...K_{N} auch Platzbedarf und Verlustleistung erhöhen, kann es vor allem bei Sensorarrays TPA mit sehr viel Pixeln unter Berücksichtigung von thermischer Auflösung und Platzbedarf auch sinnvoll sein, a > 1 zu wählen.

Um möglichst viele Signalverarbeitungskanäle K₁...K_{N} auf dem Chip unterzubringen, muss sowohl der Flächenbedarf, als auch die Verlustleistung der einzelnen Kanäle sehr gering sein, um Chipgröße und Kosten, aber auch thermisches Übersprechen zwischen den Thermopile Pixel SE des Sensorarrays TPA gering zu halten.

Um das zu erreichen, werden Signalverarbeitungskanäle K₁...K_{N} mit jeweils nur einem kleinen rauscharmen Vorverstärker W mit einem vergleichsweise geringen Verstärkungsfaktor, d.h. kleiner 500-fach und ein langsamer stromsparender Analog/Digital-Wandler ADC mit hoher Auflösung, d.h. mit mindestens 10 Bit, eingesetzt.

Bevorzugt handelt es sich um Vorverstärker VV mit einem Verstärkungsfaktor von kleiner als 100-fach und die Auflösung des Analog/Digital-Wandlers ADC sollte vorzugsweise bei 16 bis 24 Bit liegen.

Durch die Kombination eines Vorverstärkers VV mit geringem Verstärkungsfaktor und eines langsamen Analog/DigitalWandlers ADC mit hoher Auflösung wird ein geringer Flächenbedarf infolge des geringen Verstärkungsfaktors gewährleistet. Außerdem wird ein geringer Stromverbrauch infolge des zwar hochauflösenden aber vergleichsweise mit geringer Übertragungsrate arbeitenden Analog/Digital-Wandler ADC sicher gestellt.

Darüber hinaus ist die Verwendung eines hoch auflösenden Analog/Digital-Wandlers ADC ohne Verwendung eines Vorverstärkers VV denkbar. Eine geringe Differenz der positiven und negativen Referenzspannung VREF der Analog/Digital-Wandler ADC ist vorteilhaft, weil dadurch die Temperaturauflösung vergrößert wird.

Als Vorverstärker VV eignen sich z.B. sogenannte Auto-Zero (switched Chopper-) Verstärker, die sich durch geringe Offsetspannungen und Offsetspannungsdriften auszeichnen. Bei einem Verstärkungsfaktor < 100...500 kann ein Chopperverstärker einstufig und damit besonders platz- und stromsparend aufgebaut werden.

Für langsame Analog/Digital-Wandler ADC mit hoher Auflösung eignen sich beispielsweise das "Sigma/Delta"-Verfahren, oder das "Charge-Balancing"-Verfahren. Da sehr viele Analog/Digital-Wandler ADC auf dem Sensorchip SP parallel arbeiten, ergibt sich im Vergleich zu herkömmlichen Thermopile Infrarot Sensorarrays mit nur einem Analog/Digital-Wandler ADC am Ausgang eine geringe Wandelrate, was zu der geforderten niedrigen Verlustleistung und dem geringem Platzbedarf führt, wie das an einem 64x64 Sensorarray TPA erklärt werden kann.

Nach dem "Sigma/Delta"-Verfahren, bzw. dem "Charge-Balancing"-Verfahren arbeitende Analog/Digital-Wandler sind in der Fachwelt bekannte und übliche Wandler.

Ein nach dem Stand der Technik aufgebautes Sensorarray mit 64x64 Pixeln mit nur einem Analog/Digital-Wandler benötigt bei einer Bildrate von 15 Hz eine Wandelrate des Analog/Digital-Wandlers ADC von 64x64 Pixel x 15 Hz = 61.440 Hz.

Bei den gemäß der Erfindung parallel arbeitenden Analog/Digital-Wandlern ADC ist eine Wandelrate von lediglich 15 Hz (bei a = 1) oder 60 Hz (bei a = 4) erforderlich. Das ermöglicht die Realisierung von Analog/Digital-Wandlern ADC mit hoher Auflösung (z.B. 16 Bit und mehr) mit sehr geringem Strom- und Platzverbrauch.

Die digitalisierten Signale jedes Signalverarbeitungskanales K₁...K_{N} können in einem Speicherfeld eines Speichers RAM zwischengespeichert werden, bevor sie zum seriellen Ausgangs-Datenstrom eines I/O-Digitalports DIO weitergeschaltet werden. Dadurch kann das Zeitregime zum Auslesen der Daten über den Digitalport DIO so gewählt werden, dass die gesamte Zeit eines Bildes für die Integration und Tiefpassfilterung der Pixelsignale zur Verfügung steht.

Die Rauschbandbreite der Signalverarbeitungskanäle K₁...K_{N} sollte bevorzugt auf die minimal notwendige reduziert werden, die sich aus dem Produkt der Zahl der Pixel SE pro Signalverarbeitungskanal K₁...K_{N} und der Bildfrequenz des Sensorarrays TPA (frame rate) ergibt.

Das kann einfach dadurch realisiert werden, dass vor dem Analog/Digital-Wandler ADC ein Tiefpassfilter TPF integriert wird, was beispielsweise als Teil des Vorverstärkers VV, oder als zusätzlicher Tiefpassfilter TPF möglich ist.

In den Fig. 3 und Fig. 4b ist eine besonders Platz sparende Variante dargestellt, bei der die Reduzierung der Rauschbandbreite in besonders bevorzugter Weise durch das Integratorverhalten eines geeigneten Analog/Digital-Wandlers ADC, z.B. eines nach dem Charge Balancing Verfahren arbeitenden Analog/Digital-Wandlers ADC, erreicht wird.

Mit der vorstehend beschriebenen neuen Signalverarbeitung wird eine deutliche Verbesserung der Performance insgesamt erreicht.

Das Rauschen nimmt im Falle von weißem Rauschen bekanntlich mit der Wurzel der Signal- bzw. Rausch-Bandbreite des Vorverstärkers VV zu. Bei der Verwendung eines 64 x 64 Sensorarrays nach dem Stand der Technik würde die Rauschbandbreite um das 64x64-fache der Bildrate (frame rate) bei nur einem Vorverstärker VV zunehmen und immer noch um das 64-fache bei einem Signalverstärker pro Spalte.

Folglich würde das Gesamtrauschen und die Temperaturauflösung eines 64x64 Sensorarrays mit einem Vorverstärker VV um das 64-fache und bei 64 Spaltenverstärkern immer noch um etwa das 8-fache höher liegen, als bei einem Array, bei dem jedes Pixel einen eigenen Signalkanal hat.

Damit kann beispielsweise ein erfindungsgemäßes 64x64 Sensorarray TPA ein bis zu 8-fach höheres thermisches Auflösungsvermögen erreichen als bekannte, nach dem Stand der Technik aufgebautes Sensorarrays. Nach gleicher Betrachtungsweise ergibt sich eine mögliche Verbesserung des thermischen Auflösungsvermögens um das 4-fache bei einem erfindungsgemäßen 16x16 Sensorarray TPA, um das 5,5-fache bei einem 32x32 Sensorarray TPA und um das 11-fache bei einem 128x128 Sensorarray TPA.

Würde bei einem 128x128 Sensorarray TPA die Zahl der Signalverarbeitungskanäle reduziert und würden sich z.B. a = 16 Pixel einen Signalverarbeitungskanal teilen, würden statt einer 11-fachen Verbesserung des thermischen Auflösungsvermögens immer noch eine 3-fach Verbesserung des Signal/Rausch-Abstandes gegenüber der WO 2006/122529 A1 und gegenüber dem sonstigen Stand der Technik mit nur einem Signalübertragungskanal um das 32-fache erreicht werden.

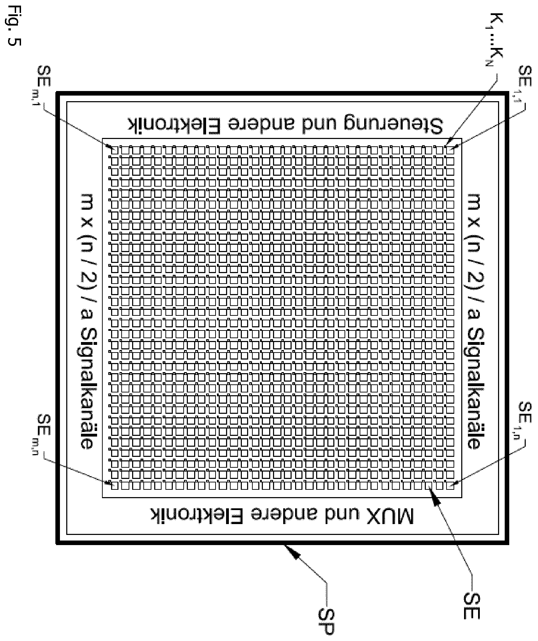

Die erfindungsgemäß gestalteten Signalverarbeitungskanäle K₁...K_{N} können sowohl im Randbereich der einzelnen Pixel SE, wie in Fig. 5 dargestellt, im peripheren Randbereich des Sensorchips SP, d.h. außerhalb der Pixel, oder auf beiden Gebieten verteilt angeordnet werden.

Um eine gute thermische Balance und damit ein homogenes Thermobild über den gesamten Sensorchip SE zu erreichen, sollten die Verlustleistungen der verschiedenen Baugruppen möglichst homogen und symmetrisch auf dem Sensorchip SE verteilt sein.

Neben den eigentlichen Signalverarbeitungskanälen K₁...K_{N} und den Multiplexern MUX können weitere Elektronikkomponenten mit auf dem Sensorchip integriert und über die Multiplexer MUX auf die digitale Schnittstelle geschaltet werden (vgl. Fig. 1 und Fig. 5). Diese weiteren Elektronikkomponenten können Temperaturreferenzen, Spannungsreferenzen, Speichermittel (z.B. EEPROMs zur Speicherung von Kalibrierdaten), gegebenenfalls auch kleine µController, z.B. zur weiteren Signalaufbereitung oder Temperaturberechnung, sein.

Weiterhin kann es von Vorteil sein, dass Zusatzinformationen REF/PTAT, wie beispielsweise die Signale von Bildpixeln oder Bildelementen, die über denselben Signalverarbeitungskanal mit dem seriellen Datenstrom eingefügt werden, um Drifteffekte zu kompensieren und dadurch die Messgenauigkeit zu erhöhen.

Die Einstellung der für die jeweilige Bildrate günstigsten Rauschbandbreite kann bei der Nutzung eines integrierenden Analog/Digital-Wandlers ADC über den intern erzeugten Muttertakt und die durch das Taktregime vorgegebene Wandelrate vorgegeben werden.

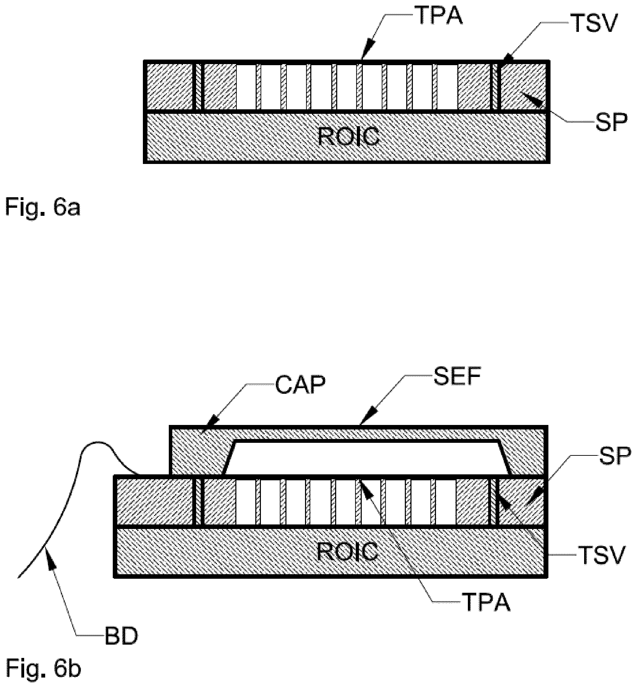

Der Vollständigkeit halber sei erwähnt, dass die Signalverarbeitungskanäle K₁...K_{N} auch auf einem separaten Chip ROIC, unterhalb des eigentlichen Sensorchips SP angeordnet sein können (Fig. 6a, 6b).

Fig. 6a zeigt eine schematische Schnittdarstellung eines Sensorchips SP mit Durchkontaktierungen TSV und einem unter diesem angeordneten separaten Chip ROIC mit in diesem integrierten Signalverarbeitungskanälen K₁...K_{N} und der weiteren Speicher- und Signalverarbeitungs-Elektronik wie vorstehend beschrieben. Die Durchkontaktierungen TSV sind mit einem leitfähigen Material gefüllte Durchgangsöffnungen durch den Sensorchip SP, die gegenüber dem Sensorchip SP isoliert sind und die an den Enden jeweils mit nicht dargestellten Leitbahnen auf dem Sensorchip SP bzw. dem separaten Chip ROIC verbunden sind. Es versteht sich, dass auch zwischen dem Sensorchip SP und dem separaten Chip RIOC eine mechanisch feste Verbindung bestehen muss.

Aus Fig. 6b geht die gleiche Anordnung wie in Fig. 6a hervor, jedoch ergänzt mit einem Abdeckwafer CAP auf dem Sensorchip SP mit einem Strahlungseintrittsfenster SEF. Das Abdeckwafer CAP kann insgesamt aus einem für Infrarot durchlässigen Material bestehen, oder lediglich einen derartigen Bereich über dem Sensorarray TPA aufweisen. Weiterhin können zusätzliche elektrische Verbindungsmittel, wie Bonddrähte BD zur Verbindung des Sensorchips SP mit weiteren Funktionsbaugruppen auf einer Leiterplatte o.dgl. die zum Betrieb des Thermopile Infrarot Sensorarrays TPA benötigt werden, vorgesehen sein.

Anstelle der Durchkontaktierungen TSV zur elektrischen Verbindung zwischen Sensorchip SP und dem separatem Chip ROIC kommen auch Umverdrahtungen in Betracht, bei denen Leitbahnen um den Seitenrand vom Sensorchip SP zum separaten Chip ROIC geführt werden.

### Bezugzeichenliste

- TPA: Sensorarray
- VV: Vorverstärker
- TPF: Tiefpassfilter
- ADC: Analog/Digital-Wandler
- K₁...K_{N}: Signalverarbeitungskanal
- SE: Pixel
- SP: Sensorchip
- RAM: Speicherfeld
- CRTL: Steuerschaltung
- DIO: Digitalport
- CLK: Taktgeber
- VREF: Referenzspannung
- VDD: Drainspannung
- VSS: Sourcespannung
- MUX: Multiplexer
- REF/PTAT: Temperaturreferenz
- a: Anzahl Pixel
- TSV: Durchkontaktierung
- ROIC: separates Chip
- CAP: Abdeckwafer
- SEF: Strahlungseintrittsfenster
- BD: Bonddraht

## Patentansprüche

1. Hochauflösendes Thermopile Infrarot Sensorarray (TPA) mit Thermopile-Elementen des Sensorarrays (TPA), nachfolgend als Pixel (SE) bezeichnet, mit monolithisch integrierter Signalverarbeitung, mehreren parallelen Signalverarbeitungskanälen (K₁...K_{N}) für die Signale der Pixel (SE) des Sensorarrays (TPA), sowie einem Digitalport zur seriellen Ausgabe der Signale der Pixel (SE),
- wobei sich das Sensorarray auf einem Sensorchip (SP) befindet
- wobei jeder Signalverarbeitungskanal (K₁...K_{N}) auf dem Sensorchip (SP) angeordnet ist und mindestens einen Analog/Digital-Wandler (ADC) aufweist,
- wobei die Ausgänge der Analog/Digital-Wandler (ADC) jedes Signalverarbeitungskanals (K₁...K_{N}) mit einem über eine Steuerschaltung auslesbaren Speicherbereich in einem Speicher (RAM) zur Speicherung der Ergebnisse der Analog/DigitalWandler (ADC) verbunden sind,
- wobei sich eine Anzahl a von mindestens einem Pixel (SE) und höchstens 16 Pixel (SE) einen Signalverarbeitungskanal (K₁...K_{N}) teilen,
- wobei die Signalverarbeitungskanäle (K₁...K_{N}) im Randbereich der einzelnen Pixel (SE), im peripheren Randbereich des Sensorchips (SP) oder auf beiden Gebieten verteilt angeordnet sind,
- wobei jeder Signalverarbeitungskanal (K₁...K_{N}) einen Tiefpassfilter (TPF) zur Begrenzung der Rauschbandbreite enthält, dessen Grenzfrequenz mindestens dem Produkt aus der Bildrate des Thermopile Infrarot Sensorarray (TPA) und der Anzahl der Pixel (SE) pro Signalverarbeitungskanal (K₁...K_{N}), höchstens jedoch dem dreifachen Betrag des Produktes entspricht,
- wobei die Anzahl a an Pixeln (SE) für 16 ≥ a > 1 über Multiplexer (MUX) oder Bereiche eines Multiplexers (MUX) auf den jeweilig zugeordneten Signalverarbeitungskanal (K₁...K_{N}) geschaltet ist, und für jeden Signalverarbeitungskanal (K₁...K_{N}) ein Signalmultiplexer (MUX) zur Auswahl der dem Signalverarbeitungskanal(K₁...K_{N}) zugeordneten Pixel (SE) des Sensorarrays (TPA) auf dem Sensorchip (SP) vorhanden ist oder wobei bei einer Anzahl von Pixeln a = 1 jedes Pixel (SP) einen eigenen Signalverarbeitungskanal (K₁...K_{N}) ohne Signalmultiplexer (MUX) besitzt,
- wobei der Mittenabstand zwischen den einzelnen Pixeln (SE) des Sensorarrays (TPA) bei weniger als 200 µm liegt,
- wobei der Analog/Digital-Wandler (ADC) eine Auflösung von mindestens 10 Bit hat sowie eine Wandelrate von mindestens 15 Hz aufweist und nach einem integrierenden Verfahren arbeitet, und
- wobei dem Analog/Digital-Wandler (ADC) in jedem Signalverarbeitungskanal (K₁...K_{N}) ein Vorverstärker (VV) vorgeschaltet ist und die Vorverstärker (VV) einen Verstärkungsfaktor aufweisen, der bei weniger als 500 liegt.

2. Hochauflösendes Thermopile Infrarot Sensorarray (TPA) nach Anspruch 1, wobei der Mittenabstand zwischen einzelnen Pixeln (SE) des Sensorarrays (TPA) bei weniger als 100 µm liegt.

3. Hochauflösendes Thermopile Infrarot Sensorarray (TPA) nach Anspruch 1 oder 2, wobei sich eine Anzahl a von mindestens einem Pixel (SE) und höchstens 8, bevorzugt höchstens 4, weiter bevorzugt höchstens 3, weiter bevorzugt höchstens 2, Pixeln (SE) einen Signalverarbeitungskanal (K₁...K_{N}) teilt.

4. Hochauflösendes Thermopile Infrarot Sensorarray (TPA) nach einem der vorgenannten Ansprüche, wobei der Analog/Digital-Wandler (ADC) nach dem Charge Balancing oder Delta-Sigma Verfahren arbeitet.

5. Hochauflösendes Thermopile Infrarot Sensorarray (TPA) nach einem der vorgenannten Ansprüche, wobei der Tiefpassfilter (TPF) Bestandteil eines integrierenden Analog/Digital-Wandlers (ADC) ist.

6. Hochauflösendes Thermopile Infrarot Sensorarray (TPA) nach einem der vorgenannten Ansprüche, wobei das Sensorarray (TPA) eine Rauschbandbreite jedes Signalverarbeitungskanals (K₁...K_{N}) in Abhängigkeit von der jeweiligen Bildrate aufweist, welche durch den integrierenden Analog/Digital-Wandler (ADC) durch den extern vorgegebenen oder intern erzeugten Muttertakt und die vorgegebene Wandelrate des Analog/DigitalWandlers (ADC) bestimmt ist.

7. Hochauflösendes Thermopile Infrarot Sensorarray (TPA) nach einem der vorgenannten Ansprüche, wobei ein Teil der Signalverarbeitungskanäle (K₁...K_{N}) jeweils im Zwischenraum zwischen den Pixeln (SE) angeordnet ist.

8. Hochauflösendes Thermopile Infrarot Sensorarray (TPA) nach einem der vorgenannten Ansprüche, wobei mindestens ein Teil der Signalverarbeitungskanäle (K₁...K_{N}) zusammen mit weiterer Elektronik in dem das Sensorarray (TPA) umgebenden Bereich im äußeren Randbereich des Sensorchips (SP) angeordnet ist.

9. Hochauflösendes Thermopile Infrarot Sensorarray (TPA) nach einem der vorgenannten Ansprüche, wobei auf dem Sensorchip (SP) neben dem Signalverarbeitungskanälen (K₁...K_{N}) und den Signalmultiplexern (MUX) weitere elektronische Komponenten integriert sind.

10. Hochauflösendes Thermopile Infrarot Sensorarray (TPA) nach Anspruch 9, wobei die besagten weiteren elektronischen Komponenten solche für eine Referenzspannung (VREF), eine Spannungsversorgung (VDD, VSS), eine Temperaturreferenz, ein Referenzdatenspeicher (REF/PTAT), ein Taktgeber (CLK), ein I/O-Diqitalport (DIO) sowie eine Signalverarbeitung sind.

## Claims

1. High-resolution thermopile infrared sensor array (TPA) with thermopile elements of the sensor array (TPA), hereinafter referred to as pixels (SE), with monolithically integrated signal processing, a plurality of parallel signal processing channels (K₁...K_{N} ) for the signals of the pixels (SE) of the sensor array (TPA), as well as a digital port for serial output of the signals of the pixels (SE),
- wherein the sensor array is located on a sensor chip (SP)
- wherein each signal processing channel (K₁...K_{N}) is arranged on the sensor chip (SP) and has at least one analog/digital converter (ADC),
- wherein the outputs of the analog/digital converters (ADC) of each signal processing channel (K₁...K_{N} ) are connected to a memory area in a memory (RAM), which can be read out via a control circuit, for storing the results of the analog/digital converters (ADC),
- wherein a number a of at least one pixel (SE) and at most 16 pixels (SE) share a signal processing channel (K₁...K_{N}),
- wherein the signal processing channels (K₁...K_{N}) are distributed in the edge area of the individual pixels (SE), in the peripheral edge area of the sensor chip (SP) or in both areas,
- wherein each signal processing channel (K₁...K_{N}) contains a low-pass filter (TPF) for limiting the noise bandwidth, the cut-off frequency of which corresponds at least to the product of the frame rate of the thermopile infrared sensor array (TPA) and the number of pixels (SE) per signal processing channel (K₁...K_{N}), but at most to three times the amount of the product,
- wherein the number a of pixels (SE) for 16 ≥ a > 1 is connected via multiplexers (MUX) or areas of a multiplexer (MUX) to the respectively assigned signal processing channel (K₁...K_{N}), and for each signal processing channel (K₁...K_{N}) a signal multiplexer (MUX) for selecting the pixels (SE) of the sensor array (TPA) assigned to the signal processing channel (K₁...K_{N}) is present on the sensor chip (SP) or, with a number of pixels a = 1, each pixel (SP) has its own signal processing channel (K₁...K_{N}) without a signal multiplexer (MUX),
- wherein the center-to-center distance between the individual pixels (SE) of the sensor array (TPA) is less than 200 pm,
- wherein the analog-to-digital converter (ADC) has a resolution of at least 10 bits and a conversion rate of at least 15 Hz and operates according to an integrating method, and
- wherein a preamplifier (VV) is connected upstream of the analog/digital converter (ADC) in each signal processing channel (K₁...K_{N}) and the preamplifiers (VV) have an amplification factor of less than 500.

2. High-resolution thermopile infrared sensor array (TPA) according to claim 1, wherein the center-to-center distance between individual pixels (SE) of the sensor array (TPA) is less than 100 µm.

3. High-resolution thermopile infrared sensor array (TPA) according to claim 1 or 2, wherein a number a of at least one pixel (SE) and at most 8, preferably at most 4, more preferably at most 3, more preferably at most 2, pixels (SE) share a signal processing channel (K₁...K_{N}).

4. High-resolution thermopile infrared sensor array (TPA) according to one of the preceding claims, wherein the analog-to-digital converter (ADC) operates according to the charge balancing or delta-sigma method.

5. High-resolution thermopile infrared sensor array (TPA) according to one of the preceding claims, wherein the low-pass filter (TPF) is a component of an integrating analog-to-digital converter (ADC).

6. High-resolution thermopile infrared sensor array (TPA) according to one of the preceding claims, wherein the sensor array (TPA) has a noise bandwidth of each signal processing channel (K₁...K_{N}) as a function of the respective frame rate, which is determined by the integrating analog-to-digital converter (ADC) by the externally predetermined or internally generated master clock and the predetermined conversion rate of the analog-to-digital converter (ADC).

7. High-resolution thermopile infrared sensor array (TPA) according to one of the preceding claims, wherein a part of the signal processing channels (K₁...K_{N}) is arranged in the space between the pixels (SE).

8. High-resolution thermopile infrared sensor array (TPA) according to one of the preceding claims, wherein at least a part of the signal processing channels (K₁...K_{N}) is arranged together with further electronics in the region surrounding the sensor array (TPA) in the outer edge region of the sensor chip (SP).

9. High-resolution thermopile infrared sensor array (TPA) according to one of the preceding claims, wherein further electronic components are integrated on the sensor chip (SP) in addition to the signal processing channels (K₁...K_{N}) and the signal multiplexers (MUX).

10. High-resolution thermopile infrared sensor array (TPA) according to claim 9, wherein said further electronic components are those for a reference voltage (VREF), a voltage supply (VDD, VSS), a temperature reference, a reference data memory (REF/PTAT), a clock generator (CLK), an I/O digital port (DIO) and signal processing.

## Revendications

1. Réseau de détecteurs infrarouges à thermopiles (TPA) à haute résolution avec des éléments thermopiles du réseau de détecteurs (TPA), désignés ci-après par pixels (SE), avec traitement de signal intégré monolithique, plusieurs canaux de traitement de signal parallèles (K₁ ...K_{N}) pour les signaux des pixels (SE) du réseau de détecteurs (TPA), ainsi qu'un port digital pour la sortie série des signaux des pixels (SE),
- le réseau de détecteurs étant situé sur une puce de capteur (SP)
- chaque canal de traitement de signal (K₁...K_{N}) étant disposé sur la puce de capteur (SP) et comprenant au moins un convertisseur analogique/numérique (ADC),
- les sorties des convertisseurs analogique/numérique (ADC) de chaque canal de traitement de signal (K₁...K_{N}) étant connectées à une zone de mémoire pouvant être lue par l'intermédiaire d'un circuit de commande dans une mémoire (RAM) pour stocker les résultats des convertisseurs analogique/numérique (ADC),
- un nombre a d'au moins un pixel (SE) et d'au plus 16 pixels (SE) se partageant un canal de traitement de signal (K₁...K_{N}),
- les canaux de traitement de signal (K₁...K_{N}) étant répartis dans la zone de bordure des différents pixels (SE), dans la zone de bordure périphérique de la puce de capteur (SP) ou sur les deux zones,
- chaque canal de traitement de signal (K₁...K_{N}) contenant un filtre passe-bas (TPF) pour limiter la largeur de bande de bruit, dont la fréquence de coupure correspond au moins au produit de la fréquence d'image du réseau de détecteurs infrarouges à thermopiles (TPA) et du nombre de pixels (SE) par canal de traitement de signal (K₁...K_{N}), mais au maximum à trois fois la valeur du produit,
- le nombre a de pixels (SE) pour 16 ≥ a > 1 étant commuté par l'intermédiaire de multiplexeurs (MUX) ou de zones d'un multiplexeur (MUX) sur le canal de traitement de signal (K₁...K_{N}) respectivement associé, et pour chaque canal de traitement de signal (K₁...K_{N}), un multiplexeur de signal (MUX) est présent sur la puce de capteur (SP) pour la sélection des pixels (SE) du réseau de détecteurs (TPA) associés au canal de traitement de signal (K₁...K_{N}) ou, pour un nombre de pixels a = 1, chaque pixel (SP) possède son propre canal de traitement de signal (K₁...K_{N}) sans multiplexeur de signal (MUX),
- la distance centrale entre les différents pixels (SE) du réseau de détecteurs (TPA) étant inférieur à 200 µm,
- le convertisseur analogique/numérique (ADC) ayant une résolution d'au moins 10 bits ainsi qu'une fréquence de conversion d'au moins 15 Hz et fonctionnant selon un procédé intégrateur, et
- un préamplificateur (VV) étant commuté en amont du convertisseur analogique/numérique (ADC) dans chaque canal de traitement de signal (K₁...K_{N}) et les préamplificateurs (VV) présentant un facteur d'amplification qui est inférieur à 500.

2. Réseau de détecteurs infrarouges à thermopiles (TPA) à haute résolution selon la revendication 1, dans lequel la distance centrale entre des pixels individuels (SE) du réseau de détecteurs (TPA) est inférieure à 100 µm.

3. Réseau de détecteurs infrarouges à thermopiles (TPA) à haute résolution selon la revendication 1 ou 2, dans lequel un nombre a d'au moins un pixel (SE) et d'au plus 8, de préférence d'au plus 4, de préférence encore d'au plus 3, de préférence encore d'au plus 2, pixels (SE) se partagent un canal de traitement de signal (K₁...K_{N}).

4. Réseau de détecteurs infrarouges à thermopiles (TPA) à haute résolution selon l'une des revendications précédentes, dans lequel le convertisseur analogique/numérique (ADC) fonctionne selon le procédé d'équilibrage de charge ou le procédé delta-sigma.

5. Réseau de détecteurs infrarouges à thermopiles (TPA) à haute résolution selon l'une des revendications précédentes, dans lequel le filtre passe-bas (TPF) fait partie d'un convertisseur analogique/numérique (CAN) intégrateur.

6. Réseau de détecteurs infrarouges à thermopiles (TPA) à haute résolution selon l'une des revendications précédentes, dans lequel le réseau de détecteurs (TPA) présent une largeur de bande de bruit de chaque canal de traitement de signal (K₁...K_{N}) en fonction de la fréquence d'image respective, qui est déterminée par le convertisseur analogique/numérique (ADC) intégrateur par l'horloge mère prédéfinie de l'extérieur ou générée de l'intérieur et la fréquence de conversion prédéfinie du convertisseur analogique/numérique (ADC).

7. Réseau de détecteurs infrarouges à thermopiles (TPA) à haute résolution selon l'une des revendications précédentes, dans lequel une partie des canaux de traitement de signal (K₁...K_{N}) est respectivement disposée dans l'espace intermédiaire entre les pixels (SE) .

8. Réseau de détecteurs infrarouges à thermopiles (TPA) à haute résolution selon l'une des revendications précédentes, dans lequel au moins une partie des canaux de traitement de signal (K₁ ...K_{N}) est disposée avec d'autres composants électroniques dans la zone entourant le réseau de détecteurs (TPA) dans la zone périphérique extérieure de la puce de capteur (SP).

9. Réseau de détecteurs infrarouges à thermopiles (TPA) à haute résolution selon l'une des revendications précédentes, dans lequel d'autres composants électroniques sont intégrés sur la puce de capteur (SP) en plus des canaux de traitement de signal (K₁...K_{N}) et des multiplexeurs de signal (MUX).

10. Réseau de détecteurs infrarouges à thermopiles (TPA) à haute résolution selon la revendication 9, dans lequel lesdits autres composants électroniques sont ceux pour une tension de référence (VREF), une alimentation en tension (VDD, VSS), une référence de température, une mémoire de données de référence (REF/PTAT), une horloge (CLK), un port numérique d'entrée/sortie (DIO) et un traitement de signal.
